# EUROPEAN PATENT SPECIFICATION

(11) **EP 1 704 259 B1**
(45) Date of publication and mention of the grant of the patent: **06.05.2009**
(21) Application number: 05701720.4
(22) Date of filing: 04.01.2005
(51) Int. Cl.: C13K 1/06, C08B 30/12

(54) **DEPOLYMERIZATION METHOD**
DEPOLYMERISIERUNGSVERFAHREN
PROCEDE DE DEPOLYMERISATION

(30) Priority: 05.01.2004 FI 20040005
(43) Date of publication of application: 27.09.2006
(73) Proprietor: Kemira Oyj, 00180 Helsinki (FI)
(72) Inventor: MYLLYMÄKI, Vesa, FI-00200 Helsinki (FI); AKSELA, Reijo, FI-02360 Espoo (FI)
(74) Representative: Svensson, Johan Henrik
(86) International application number: PCT/FI2005/000004
(87) International publication number: WO 2005/066374

(56) References cited:
- US-B1- 6 350 721
- PATENT ABSTRACTS OF JAPAN vol. 13, no. 549 (C-662), 7 December 1989 (1989-12-07) & JP 01 225601 A (JUNICHI AZUMA), 8 September 1989 (1989-09-08)
- RICHARD P. SWATLOSKI ET AL.: "Dissolution of cellulose with ionic liquids" JOURNAL OF THE ANERICAN CHEMICAL SOCIETY, no. 124, 2002, pages 4974-4975, XP002325200
- PATENT ABSTRACTS OF JAPAN vol. 2002, no. 5, 3 May 2002 (2002-05-03) & JP 2002 003478 A (JAPAN SCIENCE & TECHNOLOGY CORP), 9 January 2002 (2002-01-09)

## Description

### Field of the invention

The present invention is directed to a method for depolymerizing starch.

### Background art

### Starch

Unlike other carbohydrates and edible polymers, starch occurs as discrete particles called starch granules. These are generally composed of two type of molecules, amylose and amylopectin. Of these, amylose is a linear (1,4)-α-D-glucan, while amylopectin is a branched, bushlike structure containing both (1,4)-α-D linkages between D-glucose residues and (1,6)-α-D branch points, Ullmann's Encyclopedia of Industrial Chemistry, Vol. A25, 1994, p. 1-18. Following formulae depict representative structures of amylose and amylopectin.

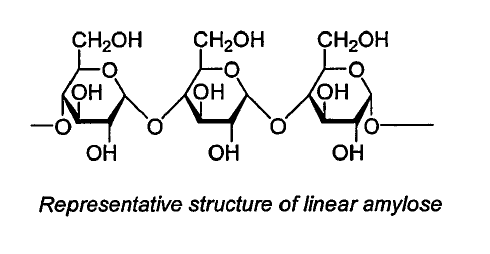

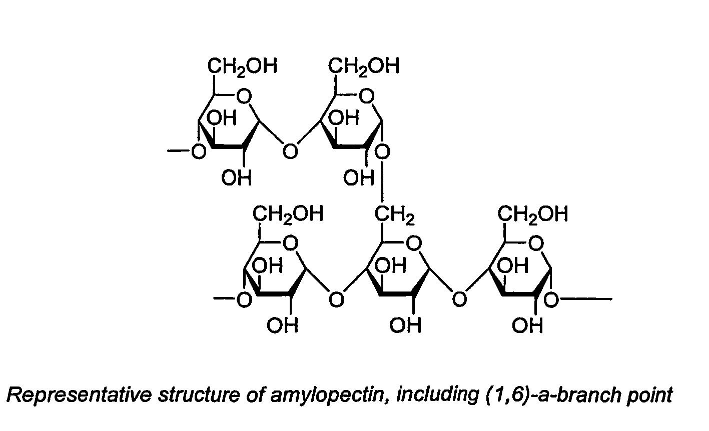

Normal starches contain approximately 75% amylopectin molecules the rest consisting of amylose. Amylopectin is a very large molecule with molecular masses ranging from one to several millions. Linearly structured amylose is considerably smaller and the molecular masses usually fall in the range of 5000 - 200000.

Commercial starches are obtained from seeds, particularly corn, wheat, rice, tapioca arrowroot, sago, and potato. Especially in Scandinavia, also barley is utilized as a native starch source. Among these, the starch granules vary in diameter from 1-100 µm. Rice starch has the smallest granules (3-9 µm), potato starch ranges between 15-100 µm and corn starch granules are 5-26 µm with an average diameter of 15 µm. Additionally, wheat starch granules are typically from 3 to 35 µm and corresponding barley starch from 5 to 35 µm*.* Kirk-Othmer, Encyclopedia of Chemical Technology, 1997, 4th edition, Vol. 22, p. 699-719 and Ketola H, Andersson T, Papermaking Chemistry, 1999, Book 4, p. 269-274*.*

Due to their extremely high molecular masses as well as chemical composition consisting of both amylose and especially bushlike amylopectin, these branched polysaccharides are practically insoluble into other solvents than water. And in water, the starch granules must be cooked before they will release their watersoluble molecules. In general, they do not form true solutions in water because of their molecular sizes and intermolecular interactions; rather they form molecular dispersions. Most starch derivatives can be prepared from any native starch but, for reasons of solublity and molecular size, they are mainly produced from potato starch and, in the United States, from waxy maize starch.

Above a certain temperature, characteristic for each type of starch and known as gelatinization temperature, the starch grains burst and form a gel. The viscositity increases to a maximum, and then decreases asymptotically to a limiting value as the solubilized polymer molecules in water disperse. Complete solubilization of individual molecules of a starch grain only occurs above 100°C, Ullmann's Encyclopedia of Industrial Chemistry, Vol. A26, 1995, p. 246-248*.*

The effect of thermal treatment on starches depends strongly on whether it occurs in excess water, limited water, under pressure, or in extrusion cooking. In excess water it appears that starch swelling is a two-stage process consisting of initial granule swelling followed then by granule dissolution. Both of these steps are irreversible. In limited water, thermal responses have been interpreted as being due to starch crystallite melting. When extrusion cooking is applied, starch granules are torn physically apart, allowing thus more rapid penetration of water into the granule. In contrast to normal gelatinization, starch fragmentation (dextrinization) appears to be the predominant reaction during extrusion, Kirk-Othmer, Encyclopedia of Chemical Technology, 1997, 4th edition, Vol. 22, p. 699-719*.*

### Starch depolymerization

Depolymerization can be achieved by acid hydrolysis; enzymatic, thermomechanical or thermochemical conversion; or by pyroconversion.

Acid-modified starch is prepared today by heating a starch slurry with 36-40% solids content to 40-60°C (below the gelatinization temperature of the starch) with hydrochloric acid or sulphuric acid (pH < 3) for one to 30 hours. When the desired degree of hydrolysis is achieved, the acid is neutralized, and the granular modified starch is filtered, washed and dried, Ullmann's Encyclopedia of Industrial Chemistry, Vol. A25, 1994, p. 13 and Ketola H, Andersson T, Papermaking Chemistry, 1999, Book 4, p. 269-274*.*

Acid modified, or thin-boiling starch has considerably lower molecular mass than native starch. For example, the DP of potato starch, which is initially 1630, drops to 990 after 4h treatment with 0.2 N HCl at 45°C. Acidic treatment below the gelatinization temperatures initially attacks amorphous regions of the granule but leaves the crystalline regions relatively unaffected. For example in corn starch modification, amylopectin is more extensively depolymerized than amylose, Kirk-Othmer, Encyclopedia of Chemical Technology, 1997, 4th edition, Vol. 22, p. 699-719*.*

In enzymatic conversion starch is treated with for example α-amylase at 80°C. The conversion depends on several factors affecting the enzyme activity. The enzyme activity must be destroyed when appropriate hydrolysis product is achieved. If not, the conversion of starch will continue. Mere thermomechanical conversion at 150 to 170°C will only result in slight hydrolysis, while thermochemical conversion wherein the cooking at 120 to 150°C is assisted with an acid or an oxidant results in a more powerful hydrolysis of starch.

The previous examples have only described partial depolymerization aiming mostly in rheological modification of starch. The hydrolysis can also result in monomeric or oligomeric sugars. In the United States, today's fuel ethanol is derived almost entirely from the starch (a biopolymer of glucose) contained in corn. The ability to commercially produce sugars from starch is the result of one of the earliest examples of modern industrial enzyme technology-the production and use of α-amylases, glucoamylases and glucose isomerase in starch processing.

### Pure amylopectin

Recent genetically modified plants can produce a starch made of pure amylopectin. The properties of pure amylopectin and its chemical derivatives are expected to be different and remarkably improved compared to those of the starch chemical derivatives marketed today for example for the paper and food industry.

### Ionic liquids

The literature knows many synonyms used for ionic liquids. Up to date, "molten salts" is maybe the most broadly applied term for ionic compounds in the liquid state. There is a difference between molten salts and ionic liquids, however. Ionic liquids are salts that are liquid around room temperature (typically -100°C to 200°C, but this might even exceed 300°C) (Wassercheid, P.; Welton, T., Ionic Liquids in Synthesis 2003, WILEY-VCH, p. 1-6,41-55 and 68-81). Therefore, the term RTIL (room temperature ionic liquids) is commonly applied for these solvents.

RTILs are non-flammable, non-volatile and they possess high thermal stabilities. Typically, these solvents are organic salts or mixtures consisting of at least one organic component. By changing the nature of the ions present in an RTIL, it is possible to change the resulting properties of the RTILs. The lipophilicity of an ionic liquid of a RTIL is easily modified by the degree of cation substitution. Similarly, the miscibility with water and other protic solvents can be tuned from complete miscibility to almost total immiscibility, by changing the anion substitution.

All these variations in cations and anions can produce a very large range of ionic liquids allowing the fine-tuning for specific applications. Furthermore, the RTILs are relatively cheap and easy to manufacture. They can also be reused after regeneration.

### Microwaves

It is known from the recent literature concerning organic synthesis that the reaction times of the organic reactions are remarkable reduced when the energy necessary for the occurrence of the reaction is introduced to the system by using microwave irradiation. The commonly used frequency for microwave energy is 2.45 GHz.

There is a wide and continuously increasing literature available in the area of using microwave techniques in organic synthesis. An example of a short summary article of this topic was published by Mingos in 1994 (D. Michael P. Mingos; "Microwaves in chemical synthesis" in Chemistry and industry 1. August 1994, pp. 596-599). Loupy *et. al.* have recently published a review concerning heterogenous catalysis under microwave irradiation (Loupy, A., Petit, A., Hamelin, J., Texier-Boullet, F., Jachault, P., Mathe, D.; "New solvent-free organic synthesis using focused microwave" in Synthesis 1998, pp. 1213-1234). Another representative article of the area is published by Strauss as an invited review article (C.R. Strauss; "A combinatorial approach to the development of Environmentaly Benign Organic Chemical Preparations", Aust. J. Chem. 1999, 52, p. 83-96).

### Summary of the invention

It is an object of this invention to provide a method for selective or quantitative depolymerization of starch, which method further accomplishes the fme-tuning of the molecular weight of starch composites.

The present invention is based on the surprising discovery that starch dissolved in an ionic liquid can by depolymerized, even without any acid or base catalyst or enzyme. Depending on the temperature and agitation time, the method accomplishes an efficient, gentle, environmentally benign and above all economical depolymerization of either amylose selectively or both amylose and amylopectin to yield pure amylopectin and sugars in the former and sugars only in the latter case.

The amylopectin preserved in selective depolymerization of amylose can be efficiently and economically precipitated from the ionic liquid solution by adding a non-solvent for the product. Further, the sugars (maltose, maltotriose, maltotetrose etc.) obtained from partial or quantitative depolymerization of starch can be separated efficiently and economically from the depolymerization medium by adding a non-solvent for the products or by extraction with an appropriate non-solvent to the ionic liquid solvent.

### Brief description of the drawings

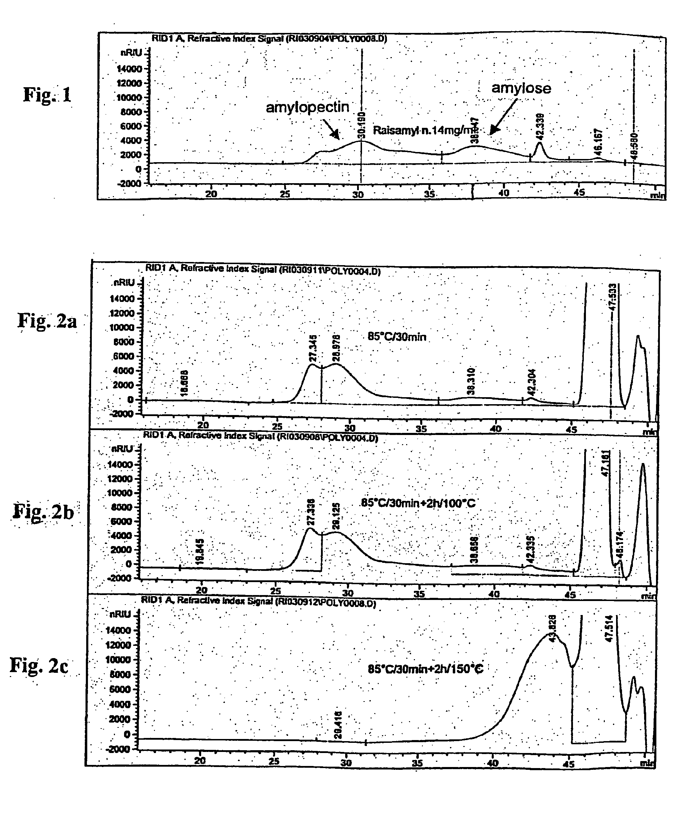

In the enclosed drawings Fig. 1 shows a spectrum obtained by GPC analysis of native starch, and Fig. 2a, 2b and 2c show spectra obtained by GPC analysis of starch samples dissolved and heated for various periods of times at different temperatures in an ionic liquid (BMIMCl).

### Detailed description of the invention

According to the invention there is provided a method for depolymerization of starch, said method comprising mixing a starch material with an ionic liquid solvent to dissolve the starch, and then treating the dissolved starch by agitating at a temperature and for a period for time to effect depolymerization of the starch into desired depolymerization products. Thereafter the desired depolymerization products can be separated from the solution.

The starch material can be any untreated or treated starch material, such as native starch or partially hydrolyzed starch. The starch can be derived from e.g. corn, wheat, rice, tapioca arrowroot, sago, potato or barley.

The depolymerization is preferably carried out without an acid or base catalyst or an enzyme. However, it is also possible to assist the depolymerization with an acid or base catalyst or an enzyme.

The dissolution and depolymerization of the starch can be assisted by applying microwave irradiation and/or pressure.

The pressure is preferably at most 2.0 MPa and more preferably between 1.5 MPa and 2.0 MPa.

The dissolution of the starch can be carried out at a temperature between 0°C and 250°C, preferably at a temperature between 10°C and 170°C, such as between 20°C and 130°C. If microwave irradiation is applied, the heating can be carried out be means of this irradiation. The solution is agitated until complete dissolution is obtained.

The depolymerization temperature is preferably at least 70°C, more preferably at least 80°C. The depolymerization temperature can be between 70°C and 210°C, preferably between 80°C and 170°C. The depolymerization time is preferably at least 30 minutes. The depolymerization time can be between 5 minutes and 10 hours.

According to one embodiment of the present invention the starch is depolymerized selectively such that the amylose of the starch is depolymerized into sugars and the amylopectin of the starch is retained essentially unchanged.

According to another embodiment of the present invention the starch is depolymerized quantitatively such that both the amylose and the amylopectin of the starch are depolymerized into sugars.

In the dissolution no auxiliary organic solvents or co-solvents, such as nitrogen-containing bases, e.g. pyridine, are necessary.

The dissolution and depolymerization are carried out in the substantial absence of water. The phrase "in the substantial absence of water" means that not more than a few percent by weight of water is present. Preferably, the water content is less than 1 percent by weight.

The starch can be present in the solution in an amount of about 1% to about 35% by weight of the solution. Preferably the amount is from about 10% to about 20% by weight.

The ionic liquid solvent is molten at a temperature between -100°C and 200°C, preferably at a temperarure of below 170°C, and more preferably between -50°C and 120°C.

The cation of the ionic liquid solvent in preferably a five- or six-membered heterocyclic ring optionally being fused with a benzene ring and comprising as heteroatoms one or more nitrogen, oxygen or sulfur atoms. The heterocyclic ring can be aromatic or saturated. The cation can be one of the following: 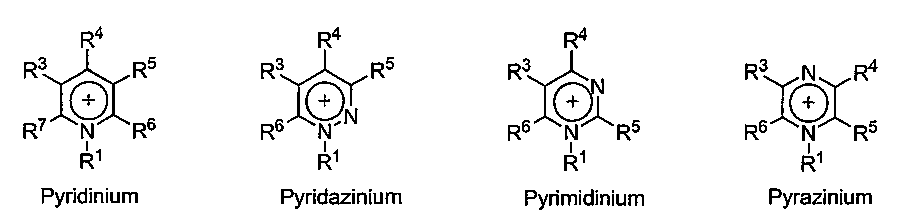 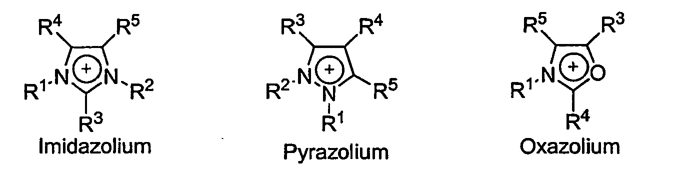 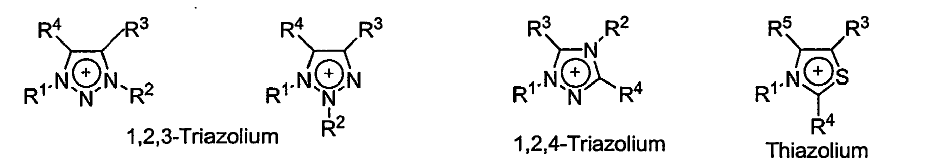 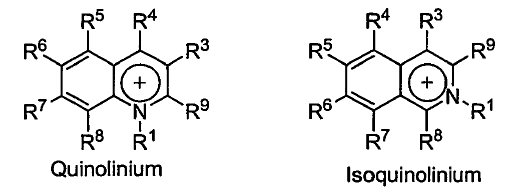 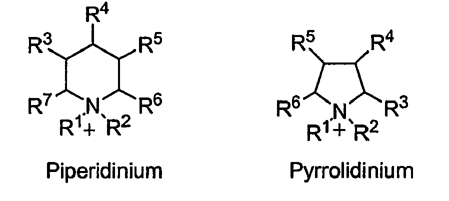 wherein R¹ and R² are independently a C₁-C₆ alkyl or C₂-C₆ alkoxyalkyl group, and R³, R⁴, R⁵, R⁶, R⁷, R⁸ and R⁹ are independently hydrogen, a C₁-C₆ alkyl, C₂-C₆ alkoxyalkyl or C₁-C₆ alkoxy group or halogen.

In the above formulae R¹ and R² are preferably both C₁-C₄ alkyl, and R3-R9, when present, are preferably hydrogen.

C₁-C₆ alkyl includes methyl, ethyl, propyl, iso-propyl, butyl, sec-butyl, tert-butyl, pentyl, the isomers of pentyl, hexyl and the isomers of hexyl.

C₁-C₆ alkoxy contains the above C₁-C₆ alkyl bonded to an oxygen atom.

C₂-C₆ alkoxyalkyl is an alkyl group substituted by an alkoxy group, the total number of carbon atoms being from two to six.

Halogen is preferably chloro, bromo or fluoro, especially chloro.

Preferred cations have following formulae: 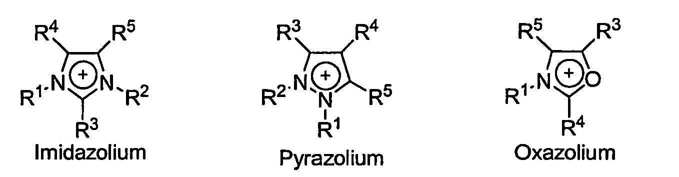 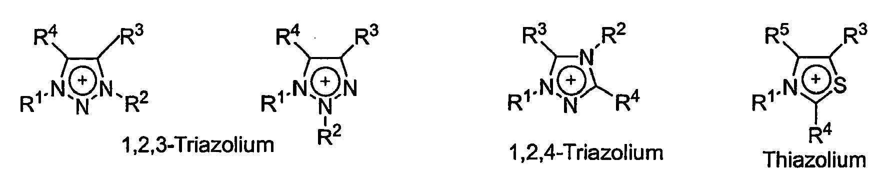 wherein R¹-R⁵ are as defined above.

An especially preferred cation is the imidazolium cation having the formula: 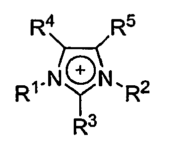 wherein R¹-R⁵ are as defined above. In this formula R³-R⁵ are preferably each hydrogen and R¹ and R² are independently C₁-C₆ alkyl or C₂-C₆ alkoxyalkyl. More preferably one of R¹ and R² is methyl and the other is C₁-C₆ alkyl. In this formula R³ can also be halogen, preferably chloro.

The anion of the ionic liquid solvent can be one of the following:
halogen such as chloride, bromide or iodide;
pseudohalogen such as thiocyanate or cyanate;
perchlorate;
C₁-C₆ carboxylate such as formate, acetate, propionate, butyrate, lactate, pyruvate, maleate, fumarate or oxalate;
nitrate;
C₂-C₆ carboxylate substituted by one or more halogen atoms such as trifluoroacetic acid;
C₁-C₆ alkyl sulfonate substituted by one or more halogen atoms such as trifluoromethane sulfonate (triflate);
tetrafluoroborate BF₄⁻; or
phosphorus hexafluoride PF₆⁻.

The above halogen substituents are preferably fluoro.

The anion of the ionic liquid solvent is preferably selected among those providing a hydrophilic ionic liquid solvent. Such anions include halogen, pseudohalogen or C₁-C₆ carboxylate. The halogen is preferably chloride, bromide or iodide, and the pseudohalogen is preferably thiocyanate or cyanate.

If the cation is a 1-(C₁-C₆-alkyl)-3-methyl-imidazolium, the anion is preferably a halogenid, especially chloride.

A preferred ionic liquid solvent is 1-butyl-3-methyl-imidazolium chloride (BMIMCl) having a melting point of about 60°C.

Another type of ionic liquid solvents useful in the present invention is an ionic liquid solvent wherein the cation is a quaternary ammonium salt having the formula 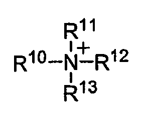 wherein R¹⁰, R¹¹, R¹² and R¹³ are independently a C₁-C₃₀ alkyl, C₃-C₈ carbocyclic or C₃-C₈ heterocyclic group, and the anion is halogen, pseudohalogen, perchlorate, C₁-C₆ carboxylate or hydroxide.

The C₁-C₃₀ alkyl group can be linear or branched and is preferably a C₁-C₁₂ alkyl group.

The C₃-C₈ carbocyclic group includes cycloalkyl, cycloalkenyl phenyl, benzyl and phenylethyl groups.

The C₃-C₈ heterocyclic group can be aromatic or saturated and contains one or more heteroatoms selected from the group consisting of nitrogen, oxygen and sulfur.

After the depolymerization the obtained products can be separated from the solution by adding a non-solvent for the depolymerization products to precipitate the depolymerization products. The non-solvent should also be a non-solvent for the ionic liquid solvent and miscible with the ionic liquid solvent. Said non-solvent is preferably an alcohol, such as a C₁-C₆ alkanol, for example methanol, ethanol, propanol or isopropanol. Also other non-solvents, such as ketones (e.g. acetone), acetonitrile, dichloromethane, polyglycols and ethers can be used. When appropriate for the depolymerization product, even water can be employed as a non-solvent.

It is also possible to separate the obtained depolymerization products by extraction with a suitable solvent that is a non-solvent for the ionic liquid solvent.

The main advantages of preferred methods of the present invention for the depolymerization of starch in ionic liquids are as follows:
- possibility to depolymerize amylose selectively and accomplish a method to obtain pure amylopectin from starch
- possibility to depolymerize starch quantitatively into monosaccharides and oligosaccharides having utilization both as low cost, high volume commodities and as low volume specialty chemicals
- possiblity to fine-tune the molecular weight of starch composites, especially that of amylopectin
- fast and economical depolymerization of starch
- fast and economical separation of products by precipitating the prepared product by adding a non-solvent for the product, and further, a simple, energy efficient drying procedure of the products
- possibility to separate the products by extraction with an appropriate non-solvent to ionic liquid solvent
- dramatically faster depolymerization at lower temperatures by use of microwave irradiation and/or pressure
- mild conditions, no acid or base catalyst needed
- no enzyme necessary needed
- possibility to reuse the ionic liquids

The percentages in this specification refer to % by weight unless otherwise specified.

### Examples

All depolymerization products were analyzed with GPC (Gel Permeation Chromatography, Agilent 1100 series), employing three sequential ultrahydrogel columns (500, 250 and 120) and a refractive index detector. Sample concentration 1.00 g/l, inject volume 50 µl, flow rate 0.600 ml/min and the eluent employed was 2.5% ACN/0.1 M NaNO₃.

### Example 1

*Depolymerization of native barley starch at 150°*C

A 150 mg (1 mmol) sample of oven dried native barley starch (Raisamyl) was added into ionic liquid (BMIMCl, 3 ml) and the resulting clear mixture was stirred 30 minutes at 85°C and at 150°C for 2 hours. The pale brown reaction mixture was analyzed with GPC. All the starch was depolymerized into monomeric products, see Fig. 2c.

### Example 2

### Depolymerization of native barley starch at 100°C

A 150 mg (1 mmol) sample of oven dried native barley starch (Raisamyl) was added into ionic liquid (BMIMCl, 3 ml) and the resulting clear mixture was stirred 30 minutes at 85°C and at 100°C for 2 hours. The clear reaction mixture was analysed with GPC. The amylose component of the starch was depolymerized into monomeric products, amylopectin remaining intact, see Fig. 2b.

### Example 3

### Depolymerization of native barley starch at 85°C

A 150 mg (1 mmol) sample of oven dried native barley starch (Raisamyl) was added into ionic liquid (BMIMCl, 3 ml) and the resulting clear mixture was stirred 30 minutes at 85°C. The clear reaction mixture was analyzed with GPC. The amylose component of the starch was almost completely depolymerized into monomeric products, amylopectin remaining intact, see Fig. 2a.

### Example 4

### Depolymerization of native barley starch at 60°C

A 150 mg (1 mmol) sample of oven dried native barley starch (Raisamyl) was added into ionic liquid (BMIMCl, 3 ml) and the resulting clear mixture was stirred 2 hours at 60°C. The clear reaction mixture was analyzed with GPC. The GPC spectrum showed no changes compared to starting material spectrum.

### Example 5

### Depolymerization of native barley starch at 45°C

A 150 mg (1 mmol) sample of oven dried native barley starch (Raisamyl) was added into ionic liquid (BMIMCl, 3 ml) and the resulting clear mixture was stirred 2 hours at 45°C. The clear reaction mixture was analyzed with GPC. The GPC spectrum showed no changes compared to starting material spectrum.

## Claims

1. A method for depolymerizing starch comprising mixing a starch material with an ionic liquid solvent to dissolve the starch, and then treating the dissolved starch by agitating at a temperature and for a period for time to effect depolymerization of the starch into desired depolymerization products.

2. The method according to claim 1 wherein microwave irradiation is applied to assist in dissolution and depolymerization.

3. The method according to claim 1 or 2 wherein pressure is applied to assist in dissolution and depolymerization.

4. The method according to any of claims 1 to 3 wherein the depolymerization temperature is at least 70°C, preferably at least 80°C.

5. The method according to any of claims 1 to 4 wherein the depolymerization period is at least 5 minutes.

6. The method according to any of claims 1 to 5 wherein the starch is depolymerized selectively such that the amylose of the starch is depolymerized into sugars and the amylopectin of the starch is retained essentially unchanged.

7. The method according to any of claims 1 to 5 wherein the starch is depolymerized quantitatively such that both the amylose and the amylopectin of the starch are depolymerized into sugars.

8. The method according to claim 1 wherein the ionic liquid solvent is molten at a temperature of below 200°C.

9. The method according to claim 1 wherein the cation of the ionic liquid solvent is selected from the group consisting of 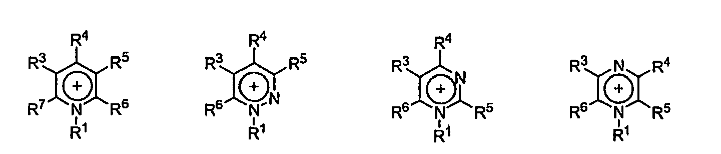 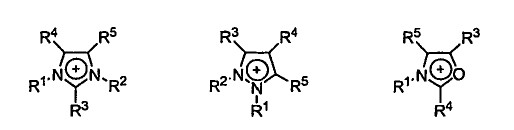 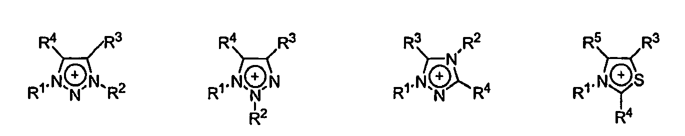 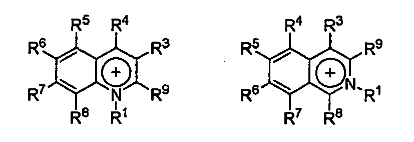 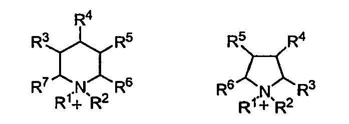 wherein R¹ and R² are independently a C₁-C₆ alkyl or C₂-C₆ alkoxyalkyl group, and R³, R⁴, R⁵, R⁶, R⁷, R⁸ and R⁹ are independently hydrogen, a C₁-C₆ alkyl, C₂-C₆ alkoxyalkyl or C₁-C₆ alkoxy group or halogen, and
wherein the anion of the ionic liquid solvent is halogen, pseudohalogen, perchlorate or C₁-C₆ carboxylate.

10. The method according to claim 9 wherein said cation comprises 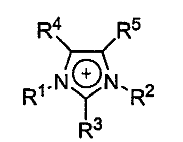 wherein R³-R⁵ are each hydrogen and R¹ and R² are the same or different and represent C₁-C₆ alkyl, and said anion is halogen, preferably chloride.

11. The method according to claim 1 wherein the cation of the ionic liquid solvent is 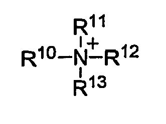 wherein R¹⁰, R¹¹, R¹² and R¹³ are independently a C₁-C₃₀ alkyl, C₃-C₈ carbocyclic or C₃-C₈ heterocyclic group and the anion of the ionic liquid solvent is halogen, pseudohalogen, perchlorate, C₁-C₆ carboxylate or hydroxide.

12. The method according to claim 1 wherein the depolymerization products are separated from the solution by adding a non-solvent for the depolymerization products to precipitate the depolymerization products.

13. The method according to claim 12 wherein said non-solvent is an alcohol, a ketone, acetonitrile, dichloromethane, a polyglycol, an ether or water.

14. The method according to claim 1 wherein the depolymerization products are separated by extraction with a non-solvent for the ionic liquid solvent.

## Patentansprüche

1. Verfahren zum Depolymerisieren von Stärke umfassend Mischen eines Stärkematerials mit einem ionischen flüssigen Lösemittel, um die Stärke zu lösen, und dann Behandeln der gelösten Stärke durch Bewegen bei einer Temperatur und über einen Zeitraum, um Depolymerisation der Stärke in gewünschte Depolymerisationsprodukte zu bewirken.

2. Das Verfahren nach Anspruch 1, worin Mikrowellenbestrahlung angewandt wird, um Lösen und Depolymerisation zu unterstützen.

3. Das Verfahren nach Anspruch 1 oder 2, worin Druck angewandt wird, um Lösen und Depolymerisation zu unterstützen.

4. Das Verfahren nach einem der Ansprüche 1 bis 3, worin die Depolymerisationstemperatur wenigstens 70°C, bevorzugt wenigstens 80°C beträgt.

5. Das Verfahren nach einem der Ansprüche 1 bis 4, worin die Depolymerisationsdauer wenigstens 5 Minuten beträgt.

6. Das Verfahren nach einem der Ansprüche 1 bis 5, worin die Stärke selektiv depolymerisiert wird, sodass die Amylose der Stärke zu Zuckern depolymerisiert wird, und das Amylopektin der Stärke im Wesentlichen unverändert bleibt.

7. Das Verfahren nach einem der Ansprüche 1 bis 5, worin die Stärke quantitativ depolymerisiert wird, sodass sowohl die Amylose als auch das Amylopektin der Stärke zu Zuckern depolymerisiert werden.

8. Das Verfahren nach Anspruch 1, worin das ionische flüssige Lösemittel bei einer Temperatur unterhalb von 200°C geschmolzen wird.

9. Das Verfahren nach Anspruch 1, worin das Kation des ionischen flüssigen Lösemittels ausgewählt ist aus der Gruppe, die aus 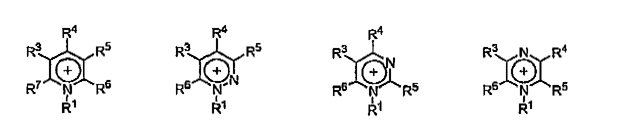 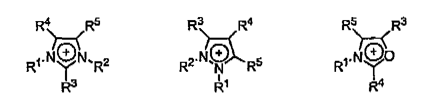 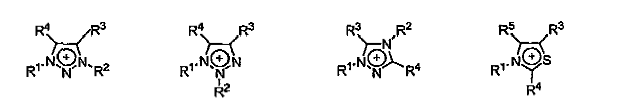 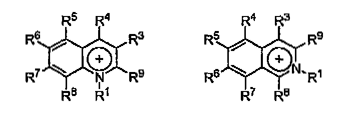 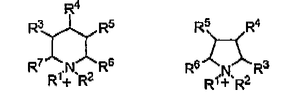 besteht, worin R¹ and R² unabhängig voneinander eine C₁-C₆-Alkyl- oder C₂-C₆-Alkoxyalkylgruppe sind, und R³, R⁴, R⁵, R⁶, R⁷, R⁸ und R⁹ unabhängig voneinander Wasserstoff, eine C₁-C₆-Alkyl-, C₂-C₆-Alkoxyalkyl- oder C₁-C₆-Alkoxygruppe oder Halogen sind, und
worin das Anion des ionisclien flüssigen Lösemittels Halogen, Pseudohalogen, Perchlorat oder C₁-C₆-Carboxylat ist.

10. Das Verfahren nach Anspruch 9, worin das Kation 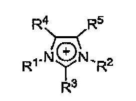 enthält, worin R³-R⁵ jeweils Wasserstoff sind, und R¹ und R² gleich oder verschieden voneinander sind und C₁-C₆-Alkyl darstellen, und das Anion Halogen, bevorzugt Chlorid ist.

11. Das Verfahren nach Anspruch 1, worin das Kation des ionischen flüssigen Lösemittels 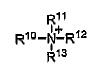 ist, worin R¹⁰, R¹¹, R¹² und R¹³ unabhängig voneinander eine C₁-C₃₀-Alkyl-, carbozyklische C₃-C₈- oder heterozyklische C₃-C₈-Gruppe sind, und das Anion des ionischen flüssigen Lösemittels Halogen, Pseudohalogen, Perchlorat, C₁-C₆-Carboxylat oder Hydroxid ist.

12. Das Verfahren nach Anspruch 1, worin die Depolymerisationsprodukte von der Lösung durch Zugegen eines Nichtlösemittels für die Depolymerisationsprodukte zum Ausfällen der Depolymerisationsprodukte abgetrennt werden.

13. Das Verfahren nach Anspruch 12, worin das Nichtlösemittel ein Alkohol, ein Keton, Acetonitril, Dichlormethan, ein Polyglykol, ein Ether oder Wasser ist.

14. Das Verfahren nach Anspruch 1, worin die Depolymerisationsprodukte durch Extraktion mit einem Nichtlösemittel für das ionische flüssige Lösemittel abgetrennt werden.

## Revendications

1. Procédé pour dépolymériser de l'amidon comprenant le fait de mélanger un matériau amidon avec un solvant liquide ionique, pour dissoudre l'amidon, et ensuite traiter l'amidon dissous en agitant à une température et pendant un laps de temps pour réaliser la dépolymérisation de l'amidon, pour obtenir des produits de dépolymérisation désirés.

2. Procédé selon la revendication 1, dans lequel un rayonnement par micro-ondes est appliqué pour assister la dissolution et la dépolymérisation.

3. Procédé selon la revendication 1 ou 2, dans lequel de la pression est appliquée pour assister la dissolution et la dépolymérisation.

4. Procédé selon l'une quelconque des revendications 1 à 3, dans lequel la température de dépolymérisation est d'au moins 70°C, de préférence d'au moins 80°C.

5. Procédé selon l'une quelconque des revendications 1 à 4, dans lequel le temps de dépolymérisation est d'au moins 5 minutes.

6. Procédé selon l'une quelconque des revendications 1 à 5, dans lequel l'amidon est dépolymérisé sélectivement, de sorte que l'amylose de l'amidon soit dépolymérisée en sucres et que l'amylopectine de l'amidon soit retenue essentiellement inchangée.

7. Procédé selon l'une quelconque des revendications 1 à 5, dans lequel l'amidon est dépolymérisé quantitativement, de sorte que tant l'amylose que l'amylopectine de l'amidon soient dépolymérisées en sucres.

8. Procédé selon la revendication 1, dans lequel le solvant liquide ionique est fondu à une température au-dessous de 200°C.

9. Procédé selon la revendication 1, dans lequel le cation du solvant liquide ionique sélectionné parmi le groupe composé de 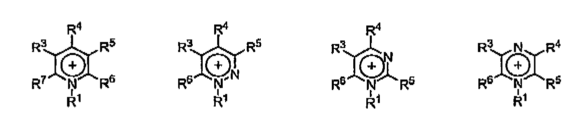 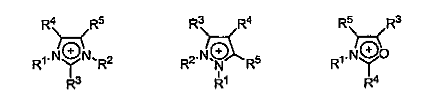 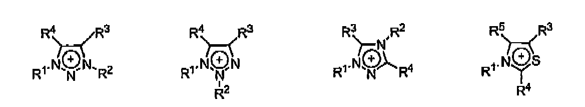 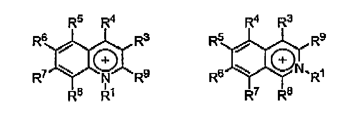 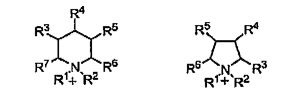 où R¹ et R² sont indépendamment un groupe alcoyle C₁-C₆ ou alcoxyalcoyle C₂-C₆, et R³, R⁴, R⁵, R⁶, R⁷, R⁸ et R⁹ sont indépendamment un groupe hydrogène, alcoyle C₁-C₆, alcoxyalcoyle C₂-C₆ ou alcoxy C₁-C₆ ou un halogène, et
dans lequel l'anion du solvant liquide ionique est un halogène, pseudo-halogène, perchlorate ou carboxylate C₁-C₆.

10. Procédé selon la revendication 9, dans lequel ledit cation comprend 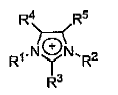 où R³-R⁵ sont, chacun, hydrogène et R¹ et R³ sont identiques ou différents et représentent alcoyle C₁-C₆, et ledit anion est un halogène, de préférence chlorure.

11. Procédé selon la revendication 1, dans lequel le cation du solvant liquide ionique est 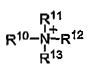 où R¹⁰, R¹¹, R¹² et R¹³ sont indépendamment un groupe alcoyle C₁-C₃₀, carboxylique C₃-C₈ ou hétérocyclique C₃-C₈ et l'anion du solvant liquide ionique est un halogène, pseudo-halogène, perchlorate, carboxylate C₁-C₆ ou hydroxyde.

12. Procédé selon la revendication 1, dans lequel les produits de dépolymérisation sont séparés de la solution par addition d'un non-solvant pour les produits de dépolymérisation, pour précipiter les produits de dépolymérisation.

13. Procédé selon la revendication 12, dans lequel ledit non-solvant est un alcool, une cétone, de l'acétonitrile, du dichloromethane, un polyglycol, un éther ou de l'eau.

14. Procédé selon la revendication 1, dans lequel les produits de dépolymérisation sont séparés par extraction avec un non-solvant pour le solvant liquide ionique.
